# EUROPEAN PATENT SPECIFICATION

(11) **EP 4 236 139 B1**
(45) Date of publication and mention of the grant of the patent: **12.11.2025**
(21) Application number: 21918589.9
(22) Date of filing: 15.01.2021
(51) Int. Cl.: H04L 1/00, H04L 1/1829, H04L 1/1867, H04L 5/00, H04W 52/14, H04W 52/54

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF DE RÉSEAU

(43) Date of publication of application: 30.08.2023
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: Taor, Simon Edward William
(86) International application number: PCT/CN2021/072243
(87) International publication number: WO 2022/151385

(56) References cited:
- EP-A1- 4 151 030
- WO-A1-2019/160737
- WO-A1-2021/067753
- CN-A- 112 204 908
- US-A1- 2019 104 543
- LG ELECTRONICS INC: "Mechanisms to improve Reliability of Broadcast/Multicast service", vol. RAN WG1, no. Online; 20201026 - 20201113, 1 November 2020 (2020-11-01), XP052349423, Retrieved from the Internet <URL:https://ftp.3gpp.org/tsg_ran/WG1_RL1/TSGR1_103-e/Docs/R1-2008065.zip R1-2008065 Mechanisms to improve reliability of MBS.docx> [retrieved on 20201101]
- LG ELECTRONICS INC.: "Mechanisms to improve Reliability of Broadcast/Multicast service", 3GPP DRAFT; R1-2008065, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online; 20201026 - 20201113, 24 October 2020 (2020-10-24), Mobile Competence Centre ; 650, route des Lucioles ; F-06921 Sophia-Antipolis Cedex ; France , XP051946567
- HUAWEI, HISILICON: "Mechanisms to improve reliability for RRC_CONNECTED UEs", 3GPP DRAFT; R1-2007563, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20201026 - 20201113, 24 October 2020 (2020-10-24), Mobile Competence Centre ; 650, route des Lucioles ; F-06921 Sophia-Antipolis Cedex ; France , XP051946415
- MEDIATEK INC.: "HARQ operation for NR MBS reliable transmission", 3GPP DRAFT; R2-2009126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20201102 - 20201113, 23 October 2020 (2020-10-23), Mobile Competence Centre ; 650, route des Lucioles ; F-06921 Sophia-Antipolis Cedex ; France , XP051942151
- CONVIDA WIRELESS: "On reliability enhancement for NR multicast and broadcast", 3GPP DRAFT; R1-2006632, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051918155

## Description

### TECHNICAL FIELD

The present disclosure relates to the communication field, and more specifically, to a wireless communication method, a terminal device, and a network device.

### BACKGROUND

In New Radio (NR), the unicast service of Radio Resource Control (RRC) connection status can be fed back by using Hybrid Automatic Repeat Request (HARQ) feedback information. There is no feedback mechanism introduced in the multicast or broadcast services of other systems, that is to say, terminal device does not need feedback when receiving multicast or broadcast services.

However, for certain services in NR, such as Vehicle to Everything (V2X) or industrial network Internet services, although the terminal devices perform transmission through multicast, these services have higher reliability requirements. Therefore, how to perform feedback on multicast or broadcast is a technical problem urgently to be solved in this field. Related art can also be found in

WO 2019/160737 A1 discloses a method and an apparatus for operation by a WTRU. A WTRU may determine whether to disable HARQ operation for TBs or CBGs which exceed a max-HARQ-size. The max-HARQ-size may be calculated by the WTRU. In an implementation, the max-HARQ-size may be based on a memory size of the WTRU or may be based on a propagation delay between the WTRU and the gNB. The propagation delay may be determined from a random access response received from the gNB.

LG ELECTRONICS INC: "Mechanisms to improve Reliability of Broadcast/Multicast service", 3GPP DRAFT R1-2008065 of November 1, 2020 discusses mechanisms to improve reliability of Broadcast/Multicast service.

WO 2021/067753 A1 anticipates methods and apparatus for HARQ feedback in NR Uu groupcast or broadcast, including methods for assigning and releasing the groupcast RNTI for Uu groupcast or broadcast, methods for enabling and disabling the HARQ feedback for Uu groupcast or broadcast, and methods for HARQ feedback and corresponding resource allocation for Uu groupcast or broadcast, including ACK-NACK based Uu groupcast HARQ feedback, NACK only based Uu groupcast HARQ feedback, and Enhanced ACK-NACK based Uu groupcast HARQ feedback. Further, it is disclosed methods for collision handling between HARQ feedback for Uu broadcast/groupcast and other transmissions.

EP 4 151 030 A1 provides a method for transmitting uplink control information, a method for receiving uplink control information, a method for configuring a downlink HARQ feedback function, a terminal and a base station. The method for transmitting uplink control information comprises: transmitting uplink control information to a base station, wherein the uplink control information comprises at least one of decoding statistical information for downlink transmission, suggestion information for downlink scheduling, or channel quality related information.

### SUMMARY

Embodiments of the present application provide a wireless communication method, a terminal device, and a network device, which can reduce power consumption and resource overhead of the terminal device on the basis of ensuring reliability of service transmission.

In a first aspect, a wireless communication method is provided as set out in claim 1. Additional features are set out in claims 2 to 5.

In a second aspect, a wireless communication method is provided as set out in claim 6. Additional features are set out in claims 7 to 9.

In a third aspect, a terminal device is provided as set out in claim 10.

In a fourth aspect, a network device is provided as set out in claim 11.

In an aspect, a chip is provided for implementing the method in any one of the above first aspect to the second aspect or various implementations thereof. Specifically, the chip includes: a processor, configured to call and run a computer program from the memory, so that the device installed with the chip executes the method in any one of the above-mentioned first to second aspects or various implementations thereof.

In an aspect, there is provided a computer-readable storage medium for storing a computer program, and the computer program causes a computer to execute the method in any one of the above-mentioned first to second aspects or various implementations thereof.

In an aspect, there is provided a computer program product, including computer program instructions, the computer program instructions cause a computer to execute the method in any one of the above first to second aspects or various implementations thereof.

In an aspect, a computer program is provided, which, when running on a computer, causes the computer to execute the method in any one of the above-mentioned first to second aspects or various implementations thereof.

Based on the above implementations, the DCI indicates to activate or deactivate the uplink feedback. When the uplink feedback is activated, the network can determine whether to send retransmission data according to the uplink feedback, which can ensure the reliability of service transmission. When the uplink feedback is deactivated, sending feedback information is avoided, and power consumption and resource overhead of the terminal device can be reduced. In particular, for multicast or broadcast services, uplink feedback can be activated or deactivated based on service reliability requirements, thereby reducing power consumption and resource overhead of terminal device while ensuring service transmission reliability.

### BRIEF DESCRIPTION OF THE DRAWINGS

FIG. 1 is an example of the system architecture of the present application.
FIG. 2 is a schematic diagram of a mapping relationship between a logical channel and a transport channel provided by an embodiment of the present application.
FIG. 3 is a schematic diagram of configuration transmission mechanism provided by an embodiment of the present application.
Fig. 4 is a schematic flowchart of a wireless communication method provided by an embodiment of the present application.
Fig. 5 is a schematic block diagram of a terminal device provided by an embodiment of the present application.
Fig. 6 is a schematic block diagram of a network device provided by an embodiment of the present application.
Fig. 7 is a schematic block diagram of a communication device provided by an embodiment of the present application.
Fig. 8 is a schematic block diagram of a chip provided by an embodiment of the present application.

### DETAILED DESCRIPTION

Hereinafter, the technical solutions in the embodiments of the present application will be described with reference to the drawings in the embodiments of the present application. Obviously, the described embodiments are part of the embodiments of the present application, but not all of the embodiments. Based on the embodiments in this application, all other embodiments obtained by persons of ordinary skill in the art without making creative efforts belong to the scope of this disclosure.

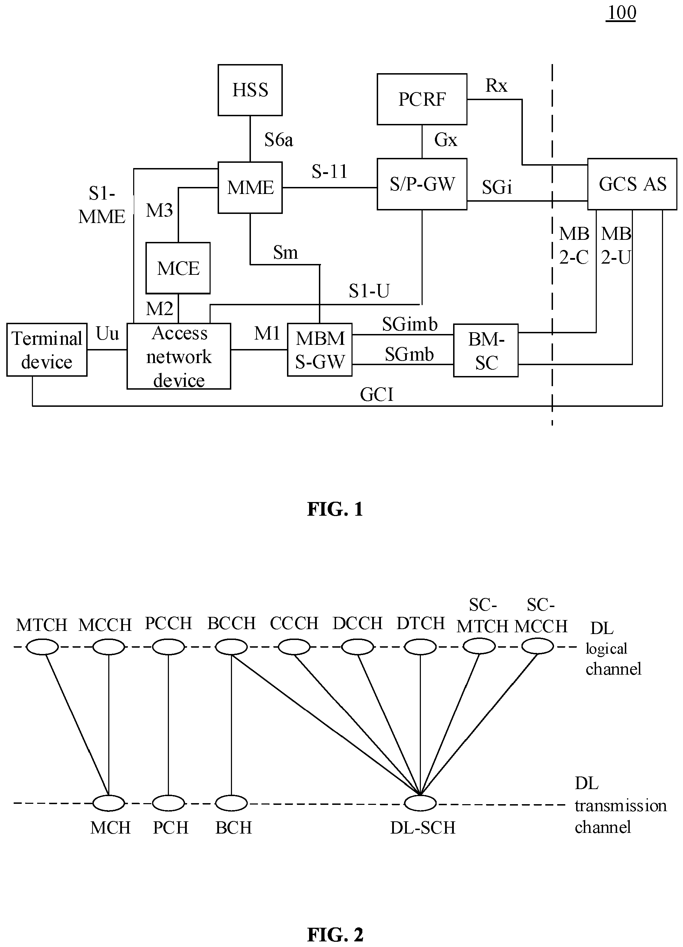

FIG. 1 is a schematic diagram of a system architecture of an embodiment of the present application.

As shown in FIG. 1, the system architecture 100 may include: a terminal device, an access network device, a multi-cell/multicast coordination entity (MCE), a mobility management network entity (MME), a home subscriber server (HSS), a policy and charging rules function (PCRF), a serving/PDN gateway (S/P-GW), a group communication service application server (GCS AS), a broadcasting multicast service center (BM-SC), a multimedia broadcast multicast service gateway (MBMS-GW).

In the embodiments, various nodes or network elements in the system architecture 100 can communicate with each other. For example, respective node or network element in the SC-PTM 100 can communicate through various types of interfaces.

For example, the terminal device can communicate with the access network device through the Uu interface; the access network device can communicate with the MCE through the M2 interface, can also communicate with the MME through the S1-MME interface, can also communicate with the MME through the M1 interface, and can also communicate with the S/P-GW through the S1-U interface; the MCE may communicate with the MME through the M3 interface; the MME may communicate with the HSS through the S6a interface, can also communicate with the S/P-GW through the S-11 interface, and can also communicate with the MBMS-GW through the Sm interface; the S/P-GW can also communicate with the GCS AS through the SGi interface, and can also communicate with the PCRF through the Gx interface; the PCRF can communicate with the GCS AS through the Rx interface; the GCS AS can also communicate with the BM-SC through the MB2-C interface and the MB2-U interface; and the BM-SC communicates with the MBMS-GW through the SGimb interface and the SGmb.

It should be understood that the above-mentioned interfaces may be interfaces stipulated or defined in communication standards, so as to realize the transmission of data or signaling between various nodes or network elements.

It should be noted that, the present application does not limit the specific implementation forms of the foregoing nodes or network elements.

For example, the access network device may be an evolved base station (Evolutional Node B, eNB or eNodeB) in a long term evolution (LTE) system, or a next generation radio access network (NG RAN) device, or a base station (gNB) in an NR system, or a wireless controller in a cloud radio access network (CRAN), or the network device 120 can be a relay station, an access point, a Vehicle-mounted device, a wearable device, a hub, a switch, a bridge, a router, or a network device in the future evolution of the public land mobile network (PLMN), etc.

For another example, the foregoing terminal device may be any terminal device, including but not limited to a terminal device that is connected to the network device 120 or other terminal devices by wire or wirelessly. For example, the terminal device may refer to an access terminal, a user equipment (UE), a subscriber unit, a subscriber station, a mobile station, a mobile site, a remote station, a remote terminal, a mobile device, a user terminal, a terminal, a wireless communication device, a user agent, or a user device. An access terminal can be a cellular phone, a cordless phone, a session initiation protocol (SIP) phone, a wireless local loop (WLL) station, a personal digital assistant (PDA), a handheld device with wireless communication function, a computing device or other processing device connected to wireless modems, a vehicle-mounted device, a wearable device, a terminal device in 5G networks or a terminal device in future evolution networks, etc. For another example, the terminal device may be used for device-to-device (D2D) communication.

As an example, the system architecture 100 may be a single cell point to multipoint (SC-PTM). The SC-PTM may be based on MBMS network architecture.

Multimedia broadcast multicast service (MBMS) is a service introduced in 3GPP Release 6. Multimedia broadcast multicast service is a technology that transmits data from one data source to multiple UEs by sharing network resources. While providing multimedia services, it can effectively use network resources and realize high-speed (such as 256 kbps) multimedia service broadcast and multicast.

Due to the low spectral efficiency of MBMS in 3GPP R6, it is not enough to effectively carry and support the operation of mobile TV services. Therefore, in the long term evolution (LTE) project of the wireless access network, 3GPP proposes to enhance the ability to support downlink high-speed multimedia broadcast multicast services, and determines the design requirements for the physical layer and air interface.

E-MBMS was introduced into the LTE network in R9. E-MBMS proposed the concept of single frequency network (SFN), that is, to use a unified frequency to transmit data in all cells at the same time, while the synchronization between cells shall be ensured. This method can greatly improve the overall signal-to-noise ratio distribution of the cell, and the spectrum efficiency will also be greatly improved accordingly. And, based on the IP (Internet Protocol) multicast protocol, the broadcast and multicast of services are realized.

In R13, SC-PTM is introduced, and SC-PTM is based on the MBMS network architecture. Optionally, the MCE decides to use the SC-PTM transmission mode or the multimedia broadcast multicast service single frequency network (MBSFN) transmission mode.

Fig. 2 is a schematic diagram of logical channels and physical channels of SC-PTM provided by the embodiment of the present application.

As shown in FIG. 2, the downlink logical channels may include a single cell multicast control channel (SC-MCCH) and a single cell multicast transport channel (SC-MTCH). For example, the logical channel identifier (LCID) of SC-MCCH is 11001, and the LCID of SC-MTCH is 11001. Both the SC-MCCH and the SC-MTCH can be mapped to the downlink shared channel (DL-SCH), for example, the physical downlink shared channel (PDSCH). Optionally, SC-MCCH and SC-MTCH do not support hybrid automatic repeat request (HARQ) operation.

In addition, as shown in FIG. 2, the downlink logical channel may also include: at least one of a multicast control channel (MCCH), a multicast transport channel (MTCH), a paging control channel (PCCH), a common control channel (CCCH), a dedicated control channel (DCCH), a broadcast control channel (BCCH) and a dedicated traffic channel (DTCH). In addition, the downlink transmission channel may further include: at least one of a broadcast channel (BCH), a paging channel (PCH), and a multicast channel (MCH).

In addition, configuration information of the SC-MCCH may be carried in a system information block (SIB). For example, SIB20 may include configuration information of SC-MCCH. Optionally, one cell has only one SC-MCCH. The configuration information may include: SC-MCCH modification period, repetition period, and radio frame and subframe configuration information. Optionally, the modification period of the SC-MCCH may indicate the change notification by one of the 8 bits in the DCI 1C. Optionally, the boundary of the modification period may be defined as SFN mod m = 0, where m is the modification period (sc-mcch-ModificationPeriod) configured in the SIB20.

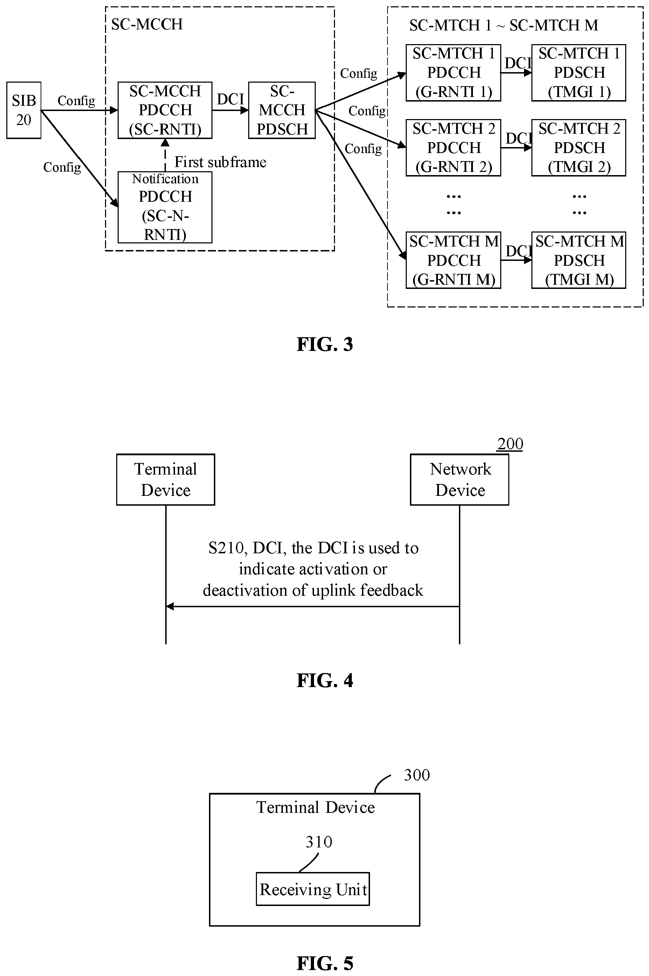

FIG. 3 is a schematic diagram of a configuration transmission mechanism provided by an embodiment of the present application.

As shown in FIG. 3, the SIB20 can configure (Config) the SC-MCCH PDCCH, and can also configure the notification PDCCH. Optionally, the SC-MCCH PDCCH may be scrambled through a single cell radio network temporary identity (Single Cell RNTI, SC-RNTI), and/or, the notification PDCCH may be scrambled through a single cell notification radio network temporary identity (Single Cell Notification RNTI, SC-N-RNTI). The downlink control information (DCI) in the SC-MCCH PDCCH may be used to schedule the SC-MCCH PDSCH. The SC-MCCH PDSCH can configure (Config) SC-MTCH 1~SC-MTCH M, wherein the SC-MTCH 1~SC-MTCH M can include SC-MTCH 1 PDCCH~SC-MTCH M PDCCH, the DCIs in the SC-MTCH 1 PDCCH~SC-MTCH M PDCCH can be used to schedule the SC-MTCH 1 PDSCH~SC-MTCH M PDSCH. Optionally, the SC-MTCH 1 PDCCH~SC-MTCH M PDCCH may be respectively scrambled by group radio network temporary identifiers (Group RNTI, G-RNTI) G-RNTI 1~G-RNTI M. Optionally, the SC-MTCH 1 PDSCH~SC-MTCH M PDSCH may carry temporary mobile group identity (TMGI) 1~TMGI M respectively.

The main application scenarios of 5G include: enhanced mobile broadband (eMBB), ultra-reliable and low latency communication (URLLC), massive machine type of communication (mMTC)).

The eMBB aims at users' access to multimedia content, services and data, and its demand is growing rapidly. Since eMBB may be deployed in different scenarios, for example, indoors, urban areas, rural areas, etc., and have relatively large differences in capabilities and requirements, it cannot be generalized, and may be analyzed in detail in combination with specific deployment scenarios. The typical applications of URLLC include: industrial automation, power automation, telemedicine operations (surgery), traffic safety assurance, etc. The typical characteristics of mMTC include: high connection density, small data volume, delay-insensitive services, low cost and long service life of modules, etc.

In the 5G network environment, in order to reduce air interface signaling, quickly restore wireless connections, and quickly restore data services, a new radio resource control (RRC) state is defined, namely RRC_INACTIVE (deactivated) state. This state is different from RRC_IDLE (idle) and RRC _CONNECTED (connected) states.

In the RRC_IDLE state: mobility is UE-based cell selection and reselection, paging is initiated by the core network (CN), and the paging area is configured by the CN. There is no UE access stratum (AS) context on the base station side, and there is no RRC connection.

In the RRC_CONNECTED state: there is an RRC connection, and the UE AS context exists between the base station and the UE. The network device knows the location of the UE at the specific cell level. Mobility is mobility controlled by network devices. Unicast data can be transmitted between the UE and the base station.

RRC_INACTIVE: Mobility is based on UE-based cell selection and reselection, there is a connection between CN-NR, UE AS context exists on a certain base station, paging is triggered by the radio access network (RAN), the RAN-based paging area is managed by the RAN, and the network device knows the location of the UE based on the paging area level of the RAN.

In NR, there is HARQ-ACK information feedback in the unicast of the RRC connection state. However, the multicast broadcast in other systems does not introduce a feedback mechanism, that is, the UE does not need feedback when receiving multicast or broadcast services. Some services in NR, such as V2X, industrial network and Internet, transmission through multicast is required. Since these services have higher and higher reliability requirements, how to provide feedback for multicast or broadcast is the technical problems that urgently need to be solved in the field.

In this application, a feedback mechanism is introduced for the multicast broadcast service in NR MBMS.

Specifically, for the NR MBMS system, four feedback mechanisms are proposed to ensure the reliability of service transmission, so that the network can determine whether to send retransmission according to the feedback information. Specifically, the four feedback mechanisms may include the following feedback mechanisms:

Feedback mechanism 1: only feedback NACK information. If the terminal does not receive the data correctly, it will feedback NACK, and if it receives the data correctly, it will not feedback. In this feedback mechanism, all terminals or a group of terminals share a PUCCH resource bearing NACK.

Feedback mechanism 2: feedback NACK information or ACK information. If the terminal does not receive the data correctly, it will feedback NACK, and if it receives the data correctly, it will feedback ACK. In this feedback mechanism, all terminals that need to feedback NACK or a group of terminals that need to feedback NACK share a PUCCH resource bearing NACK, and all terminals that need to feedback ACK or a group of terminals that need to feedback ACK share a PUCCH resource bearing ACK.

Feedback mechanism 3: feedback NACK information or ACK information. If the terminal does not receive the data correctly, it will feedback NACK, and if it receives the data correctly, it will feedback ACK. In this feedback mechanism, all terminals that need to feedback NACK or a group of terminals that need to feedback NACK share a feedback resource bearing NACK, and each terminal that needs to feedback ACK has an independent PUCCH resource bearing ACK.

Feedback mechanism 4: feedback NACK information or ACK information. If the terminal does not receive the data correctly, it will feedback NACK, and if it receives the data correctly, it will feedback ACK. In this feedback mechanism, each terminal that needs to feedback NACK has an independent PUCCH resource bearing NACK, and each terminal that needs to feedback ACK has an independent PUCCH resource bearing ACK.

However, for multicast or broadcast services, considering the service-based reliability requirements, services with higher reliability requirements can improve the reliability of service transmission based on the feedback mechanism, but for services with lower reliability requirements, it is unnecessary to introduce the feedback mechanism. Based on this, the present application provides a method for activating (enabling) or deactivating (disabling) uplink feedback, thereby reducing power consumption and resource overhead of terminal device on the basis of ensuring reliability of service transmission.

FIG. 4 is a schematic flowchart of a wireless communication method 200 provided by an embodiment of the present application. The method 200 is executed by a terminal device and a network device. For example, the terminal device and network device shown in FIG. 1.

As shown in FIG. 4, the method 200 includes:

S210. Receive downlink control information (DCI), wherein the DCI is used to indicate activation or deactivation of uplink feedback.

Specifically, the terminal device receives the DCI sent by the network device, and determines whether to activate or deactivate uplink feedback based on the DCI. In other words, in the case that the DCI is used to indicate that the uplink feedback is activated, the network device can receive the feedback information, and determine whether to send retransmission data according to the uplink feedback, so as to improve the reliability of service transmission.

Activation or deactivation of uplink feedback is indicated by the DCI. In the case of activation of uplink feedback, the network can determine whether to send retransmission data according to the uplink feedback, which can ensure the reliability of service transmission. In the case of deactivation of uplink feedback, the sending of feedback information is avoided, and the power consumption and resource overhead of the terminal device can be reduced. In particular, for multicast or broadcast services, uplink feedback can be activated or deactivated based on service reliability requirements, thereby reducing power consumption and resource overhead of terminal device while ensuring service transmission reliability.

It should be noted that, in this embodiment of the present application, the DCI is specifically used to indicate activation of a specific uplink feedback mode, for example, the DCI is used to indicate activation of uplink feedback of at least one of the above four feedback mechanisms. For example, the DCI may be used to indicate activation of uplink feedback using the above-mentioned feedback mechanism 1. The DCI may be specifically used to instruct to deactivate the uplink feedback using at least one of the above four feedback mechanisms. For example, the DCI may be used to indicate to deactivate the uplink feedback using the above-mentioned feedback mechanism 1. For another example, the DCI may be used to indicate deactivation of uplink feedback using any one of the above four feedback mechanisms, that is, the DCI may be used to indicate deactivation of all feedback mechanisms. In addition, other signaling or message may also be used to indicate activation or deactivation of uplink feedback, for example, a radio resource control (RRC), which is not specifically limited in this embodiment of the present application. In addition, the "instruction" in the embodiment of the present application may be a direct indication, may also be an indirect indication, and may also mean that there is an association relationship. For example, A indicates B, which can mean that A directly indicates B, for example, B can be obtained through A; it can also indicate that A indirectly indicates B, for example, A indicates C, and B can be obtained through C; it can also indicate that there is an association relation between A and B.

In the present application, the DCI is used to schedule a physical downlink shared channel (PDSCH) for carrying multimedia broadcast multicast service (MBMS) data.

In the present application, a value of an information field included in the DCI is used to indicate activation or deactivation of uplink feedback.

In other words, the DCI includes indication information for indicating activation or deactivation of uplink feedback.

In an implementation manner, the DCI includes a first information field for uplink feedback indication, and a value of the first information field is used to indicate activation or deactivation of uplink feedback.

For example, when the value of the first information field is a first value, the first information field is used to indicate activation of uplink feedback; or, when the value of the first information field is a second value, the first information field is used to indicate deactivation of uplink feedback.

In other words, the DCI may include indication information for indicating activation or deactivation of uplink feedback, and the indication information is carried in the first information field dedicated to the indication information. Optionally, the first information field may also be called an uplink feedback activation indication information field. Optionally, the first information field includes 1 bit. For example, a value of 1 in the first information field indicates activation of uplink feedback, and a value of 0 in the first information field indicates deactivation of uplink feedback. Of course, it may also take a value of 0 to indicate activation of uplink feedback, and a value of 1 to indicate deactivation of uplink feedback, which is not specifically limited in this embodiment of the present application.

Further, the DCI includes a transmit power control (TPC) information field for adjusting uplink transmission power, and a value of the TPC information field is used to indicate activation or deactivation of uplink feedback. In particular, the DCI includes a TPC information field for adjusting the transmission power of a physical uplink control channel (PUCCH) or a physical uplink shared channel (PUSCH), and the TPC information field is used to indicate activation or deactivation of uplink feedback.

For example, when the value of the TPC information field is a third value, the TPC information field is used to indicate activation of uplink feedback; or, when the value of the TPC information field is a fourth value, the TPC information field is used to indicate deactivation of uplink feedback. For another example, when the value of the TPC information field is a third value, the TPC information field is used to indicate activation of uplink feedback using a target feedback mechanism; or, when the value of the TPC information field is a fourth value, the TPC information field is used to indicate deactivation of uplink feedback.

In other words, the DCI includes indication information for indicating activation or deactivation of uplink feedback, and the indication information is carried in the TPC information field.

In the DCI for scheduling MBMS services, the terminals at the receiving end are usually a group of UEs. At this time, when scheduling MBMS services through one DCI, if uplink feedback is activated, different terminals may require different power adjustments, and thus the power of all terminals that need uplink feedback cannot be adjusted by the TPC command in the DCI. Therefore, the TPC information field can be reused to indicate whether to activate uplink feedback. When the DCI is used to schedule MBMS services, scrambling can be made by the group cast radio network temporary identifier (G-RNTI), multicast radio network temporary identifier (Multicast RNTI, M-RNTI) or broadcast radio network temporary identity (Broadcast RNTI, B-RNTI), and the scheduled MBMS data is also scrambled with the corresponding RNTI. Optionally, the TPC information field includes 2 bits. For example, when the value of the TPC information field in the DCI is 00, it means that the uplink feedback is deactivated; when the value is 01, it means that the uplink feedback is activated, and the values 10 and 11 can be used as a reserved value and is not used to indicate specific information. Further, the TPC information field in the DCI may indicate whether to activate uplink feedback and a specific uplink feedback mode. For example, as shown in the following table:

**Table 1**

| TPC | 00 | 01 | 10 | 11 |
|---|---|---|---|---|
| uplink feedback | deactivation | activation | activation | activation |
| feedback mode | / | mode 1 | mode 2 | mode 1 and mode 2 |

As shown in Table 1, mode 1 refers to a feedback mechanism that only feeds back NACK, and mode 2 refers to a feedback mechanism that feeds back ACK or NACK. When the value of the TPC information field in the DCI is 00, it indicates that uplink feedback is deactivated. When the value of the TPC information field in the DCI is 01, it means that the uplink feedback using mode 1 is activated; when the value of the TPC information field in the DCI is 10, it means that the uplink feedback using mode 2 is activated. When the value of the TPC information field is 11, it indicates that the uplink feedback of mode 1 and the uplink feedback of mode 2 are activated. Certainly, manner 1 and manner 2 are only examples of the present application, and other manners may also be used to indicate specific feedback manners, which are not specifically limited in this embodiment of the present application.

In an implementation manner, the DCI includes a second information field for determining a PUCCH transmission resource or a PUCCH transmission resource set, and a value of the second information field is used to indicate activation or deactivation of uplink feedback.

For example, when the value of the second information field is a fifth value, the second information field is used to indicate activation of uplink feedback; or, when the value of the second information field is a sixth value, the second information field is used to indicate deactivation of uplink feedback. For example, the second information field includes a PUCCH resource indicator information field or a PDSCH-to-HARQ_feedback timing indicator information field. In an implementation manner, the PUCCH resource indicator information field and the PDSCH-to-HARQ_feedback timing indicator information field jointly indicate activation or deactivation of uplink feedback.

In other words, the DCI may include indication information for indicating activation or deactivation of uplink feedback, and the indication information is carried in the second information field. In other words, the DCI includes a second information field, the second information field is used to determine the PUCCH transmission resource (or a PUCCH transmission resource set), and whether to activate or deactivate the uplink feedback can be determined according to the second information field.

In an implementation manner, the DCI includes a third information field and a fourth information field, and a value of the third information field and a value of the fourth information field are used to indicate activation or deactivation of uplink feedback. For example, the third information field or the fourth information field may be the TPC information field, and may also be the above-mentioned second information field (for example, the PUCCH resource indication information field or the PDSCH-to-HARQ_feedback timing indicator information field), which is not specifically limited in this embodiment of the present application.

For example, when the value of the third information field is a seventh value and the value of the fourth information field is an eighth value, the third information field and the fourth information field are used to indicate activation of uplink feedback; or, when the value of the third information field is not the seventh value and/or the value of the fourth information field is not the eighth value, the third information field and the fourth information field are used to indicate deactivation of uplink feedback.

In other words, the DCI may include indication information for indicating activation or deactivation of uplink feedback, and the indication information is carried in the third information field and the fourth information field. In other words, the third information field and the fourth information field are used to jointly indicate activation or deactivation of uplink feedback. Certainly, values of at least two information fields in the DCI may also be used to indicate activation or deactivation of uplink feedback, which is not specifically limited in this application.

In some embodiments of the present application, the format of the DCI is used to indicate activation or deactivation of uplink feedback.

For example, when the format of the DCI is the first format, the DCI is used to indicate the activation of uplink feedback; or, when the format of the DCI is the second format, the DCI is used to indicate the deactivation of uplink feedback. In other words, there are at least two types of DCI that can be used to schedule the PDSCH carrying the MBMS services. When the first type of DCI is used to schedule the PDSCH carrying the MBMS, it indicates the activation of uplink feedback. When the second type of DCI is used to schedule the PDSCH carrying the MBMS, it indicates deactivation of uplink feedback.

It should be noted that, the embodiment of the present application does not limit the specific format of the DCI. For example, in NR, different DCI formats are defined for unicast services. For example, for downlink scheduling, DCI format 1-0 or 1-1 can be used, and for uplink scheduling, DCI format 0-0 or 0-1 can be used; wherein DCI format 1-0 is also used to schedule some public information, such as SIB information, etc. At this time, the terminal is configured with SI-RNTI, and the SI-RNTI is based upon to detect DCI format 1-0, the DCI format in the embodiment of the application may be the DCI format defined for the unicast service, or a new DCI format may be introduced, which is not limited in this embodiment of the present application.

In some embodiments of the present application, the RNTI used for scrambling the DCI is used to indicate activation or deactivation of uplink feedback.

For example, when the RNTI used for scrambling the DCI is a first RNTI, the DCI is used to indicate activation of uplink feedback; or, when the RNTI used for scrambling the DCI is a second RNTI, the DCI is used to indicate deactivation of uplink feedback. Optionally, the first RNTI includes a group radio network temporary identifier G-RNTI, a broadcast radio network temporary identifier B-RNTI or a multicast radio network temporary identifier M-RNTI.

For the unicast service, the network configures a C-RNTI for the terminal, and the data transmission between the network and the terminal is scrambled through the C-RNTI. When a terminal supports MBMS services, the network configures a common RNTI, such as G-RNTI, M-RNTI or B-RNTI, and the DCI is scrambled with this common RNTI, and the MBMS data scheduled by the DCI is also scrambled with the corresponding common RNTI. For example, the network uses different RNTIs to scramble DCI for scheduling different MBMS services. If the terminal uses the first RNTI to scramble the DCI, it indicates activation of uplink feedback, and if it uses the second RNTI, it indicates deactivation of uplink feedback.

In some embodiments of the present application, a scrambling code sequence used for scrambling the DCI is used to indicate activation or deactivation of uplink feedback.

For example, when the scrambling code sequence used for scrambling the DCI is a first sequence, the DCI is used to indicate activation of uplink feedback; or, when the scrambling code sequence used for scrambling the DCI is a second sequence, the DCI is used to indicate deactivation of uplink feedback.

In some embodiments of the present application, a first parameter used for determining the scrambling code sequence of the DCI is used to indicate activation or deactivation of uplink feedback.

For example, when the first parameter is a ninth value, the DCI is used to indicate activation of uplink feedback; or, when the first parameter is a tenth value, the DCI is used to indicate deactivation of uplink feedback.

Since information bit sequence or coded bit sequence of the DCI needs to be scrambled to improve anti-interference performance, in this embodiment of the application, whether to activate uplink feedback may be determined according to the scrambling code sequence used to scramble the DCI. For example, if the DCI is scrambled by the first sequence, it indicates activation of uplink feedback, and if scrambled by the second sequence, it indicates deactivation of uplink feedback. Further, the scrambling code sequence may be determined according to a first parameter, for example, when the first parameter takes a first value, it corresponds to the first sequence, and when the first parameter takes a second value, it corresponds to the second sequence. Therefore, activating or deactivating of uplink feedback may be determined according to the first parameter used for generating the scrambling code sequence.

In some embodiments of the present application, the aggregation level (AL) of the PDCCH used for carrying the DCI is used to indicate activation or deactivation of uplink feedback.

For example, when the aggregation level of the PDCCH used for carrying the DCI is a first aggregation level, the DCI is used to indicate activation of uplink feedback; or, when the aggregation level of the PDCCH used for carrying the DCI is a second aggregation level, the DCI is used to indicate deactivation of uplink feedback.

For example, the aggregation level of PDCCH may include {1, 2, 4, 8, 16} CCEs. When the network sends a PDCCH for scheduling DCI carrying MBMS services, if the PDCCH aggregation level corresponds to 4 CCEs, it indicates activation of uplink feedback, and if the PDCCH aggregation level corresponds to 8 CCEs, it indicates deactivation of uplink feedback. Certainly, 4 and 8 are only examples of the present application, and should not be construed as limiting the present application.

In some embodiments of the present application, the DCI type is used to indicate activation or deactivation of uplink feedback.

For example, when the type of the DCI is a dedicated DCI, the DCI is used to indicate activation of uplink feedback; or, when the type of the DCI is a common DCI, the DCI is used to indicate deactivation of uplink feedback. Optionally, the dedicated DCI is scrambled by a cell wireless network temporary identity C-RNTI, and the common DCI is scrambled through a common RNTI.

In other words, when the network schedules MBMS services, it can use the common DCI (that is, sending the same DCI for the receiving terminals) to carry the scheduling information, or use the UE-specific DCI (that is, sending different DCIs for different receiving terminals) to carry the scheduling information. If the common DCI scheduling is used, it indicates to deactivate the uplink feedback, and if the UE-specific DCI scheduling is used, it indicates to activate the uplink feedback. For example, the UE-specific DCI is scrambled by the C-RNTI, and the common DCI is scrambled by the common RNTI (such as G-RNTI, M-RNTI or B-RNTI).

In some embodiments of the present application, the type of the DCI search space is used to indicate activation or deactivation of uplink feedback.

For example, when the type of the search space of the DCI is a specific search space USS, the DCI is used to indicate activation of uplink feedback; or, when the type of the search space of the DCI is a common search space CSS, the DCI is used to indicate deactivation of uplink feedback.

In other words, the search space types include common search space (CSS) and UE-specific search space. If the DCI for scheduling MBMS services is sent in CSS, it indicates deactivation of uplink feedback, and if set in USS, it indicates activation of uplink feedback.

In some embodiments of the present application, the DCI is used to indicate activation of uplink feedback using a target feedback mechanism or deactivation of uplink feedback.

In this application, the terminal device may determine whether to activate or deactivate the uplink feedback according to information such as the information field in the DCI, the DCI format, the DCI type, the type of the search space where the DCI is located, and the aggregation level of the PDCCH.

The preferred embodiments of the present application have been described in detail above in conjunction with the accompanying drawings. However, the present application is not limited to the specific details in the above embodiments. Within the scope of the technical concept of the present application, various simple modifications can be made to the technical solutions of the present application. These simple modifications all belong to the scope of the present disclosure. For example, the various specific technical features described in the above specific implementation manners can be combined in any suitable manner if there is no contradiction. In order to avoid unnecessary repetition, this application will not further describe the various possible combinations. As another example, any combination of various implementations of the present application can also be made, as long as they do not violate the idea of the present application, they should also be regarded as the content disclosed in the present application.

It should also be understood that in various method embodiments of the present application, the sequence numbers of the above-mentioned processes do not mean the order of execution. The execution sequence of the respective processes should be determined by its function and internal logic, and should not constitute any limitation to the implementation process of the embodiment of the present application. In addition, in this embodiment of the present application, the terms "downlink" and "uplink" are used to indicate a transmission direction of a signal or data, wherein, "downlink" is used to indicate that the transmission direction of signals or data is sent in the first direction from the station to the user device of the cell, and "uplink" is used to indicate that the transmission direction of signals or data is sent in the second direction from the user device of the cell to the station. For example, "downlink signal" indicates that the transmission direction of the signal is the first direction. In addition, in the embodiment of the present application, the term "and/or" is only an association relationship describing associated objects, indicating that there may be three relationships. Specifically, A and/or B may mean: A exists alone, A and B exist simultaneously, and B exists alone. In addition, the character "/" in this article generally indicates that the contextual objects are in an "or" relationship.

The method according to the embodiment of the present application has been described in detail above, and the device embodiment of the present application will be described in detail below with reference to the accompanying drawings.

FIG. 5 is a schematic block diagram of a terminal device 300 provided by an embodiment of the present application.

As shown in FIG. 5, the terminal device 300 includes:

a receiving unit 310, configured to receive downlink control information DCI, wherein the DCI is used to indicate activation or deactivation of uplink feedback.

In this application, the DCI is used to schedule a physical downlink shared channel PDSCH for carrying multimedia broadcast multicast service MBMS data.

Further, a value of an information field included in the DCI is used to indicate activation or deactivation of uplink feedback.

In some embodiments of this application, the DCI includes a first information field for uplink feedback indication, and a value of the first information field is used to indicate activation or deactivation of uplink feedback.

In some embodiments of this application, when the value of the first information field is a first value, the first information field is used to indicate activation of uplink feedback; or, when the value of the first information field is a second value, the first information field is used to indicate deactivation of uplink feedback.

Additionally, the DCI includes a transmit power control TPC information field for adjusting uplink transmission power, and a value of the TPC information field is used to indicate activation or deactivation of uplink feedback.

In some embodiments of this application, when the value of the TPC information field is a third value, the TPC information field is used to indicate activation of uplink feedback; or, when the value of the TPC information field is a fourth value, the TPC information field is used to indicate deactivation of uplink feedback.

In some embodiments of this application, when the value of the TPC information field is a third value, the TPC information field is used to indicate activation of uplink feedback using a target feedback mechanism; or, when the value of the TPC information field is the fourth value, the TPC information field is used to indicate deactivation of uplink feedback.

In some embodiments of this application, the DCI includes a second information field for determining a PUCCH transmission resource or a PUCCH transmission resource set, and a value of the second information field is used to indicate activation or deactivation of uplink feedback.

In some embodiments of this application, when the value of the second information field is a fifth value, the second information field is used to indicate activation of uplink feedback; or, when the value of the second information field is the a sixth value, the second information field is used to indicate deactivation of uplink feedback.

In some embodiments of this application, the second information field includes a PUCCH resource indication information field or a PDSCH-to-HARQ_feedback timing indicator information field.

In some embodiments of this application, the DCI includes a third information field and a fourth information field, and a value of the third information field and a value of the fourth information field are used to indicate activation or deactivation of uplink feedback.

In some embodiments of this application, when the value of the third information field is a seventh value and the value of the fourth information field is an eighth value, the third information field and the fourth information field are used to indicate activation of uplink feedback; or, when the value of the third information field is not the seventh value and/or the value of the fourth information field is not the eighth value, the third information field and the fourth information field are used to indicate deactivation of uplink feedback.

In some embodiments of this application, a format of the DCI is used to indicate activation or deactivation of uplink feedback.

In some embodiments of this application, when the format of the DCI is a first format, the DCI is used to indicate activation of uplink feedback; or, when the format of the DCI is a second format, the DCI is used to indicate deactivation of uplink feedback.

In some embodiments of this application, a radio network temporary identifier RNTI used for scrambling the DCI is used to indicate activation or deactivation of uplink feedback.

In some embodiments of this application, when the RNTI used for scrambling the DCI is a first RNTI, the DCI is used to indicate activation of uplink feedback; or, when the RNTI used for scrambling the DCI is a second RNTI, the DCI is used to indicate deactivation of uplink feedback.

In some embodiments of this application, the first RNTI includes a group radio network temporary identifier G-RNTI, a broadcast radio network temporary identifier B-RNTI, or a multicast radio network temporary identifier M-RNTI.

In some embodiments of this application, a scrambling code sequence used for scrambling the DCI is used to indicate activation or deactivation of uplink feedback.

In some embodiments of this application, when the scrambling code sequence used for scrambling the DCI is a first sequence, the DCI is used to indicate activation of uplink feedback; or, when the scrambling code sequence used for scrambling the DCI is a second sequence, the DCI is used to indicate deactivation of uplink feedback.

In some embodiments of this application, a first parameter used for determining a scrambling code sequence of the DCI is used to indicate activation or deactivation of uplink feedback.

In some embodiments of this application, when the first parameter is a ninth value, the DCI is used to indicate activation of uplink feedback; or, when the first parameter is a tenth value, the DCI is used to indicate deactivation of uplink feedback.

In some embodiments of this application, an aggregation level of a PDCCH used for carrying the DCI is used to indicate activation or deactivation of uplink feedback.

In some embodiments of this application, when the aggregation level of the PDCCH used for carrying the DCI is a first aggregation level, the DCI is used to indicate activation of uplink feedback; when the aggregation level of the PDCCH used for carrying the DCI is a second aggregation level, the DCI is used to indicate deactivation of uplink feedback.

In some embodiments of this application, a type of the DCI is used to indicate activation or deactivation of uplink feedback.

In some embodiments of this application, when the type of the DCI is a dedicated DCI, the DCI is used to indicate activation of uplink feedback; or, when the type of the DCI is a common DCI, the DCI is used to indicate deactivation of uplink feedback.

In some embodiments of this application, the dedicated DCI is scrambled by a cell wireless network temporary identifier C-RNTI, and the common DCI is scrambled by a common RNTI.

In some embodiments of this application, a type of a search space of the DCI is used to indicate activation or deactivation of uplink feedback.

In some embodiments of this application, when the type of the search space of the DCI is a specific search space USS, the DCI is used to indicate activation of uplink feedback; or, when type of the search space of the DCI is a common search space CSS, the DCI is used to indicate deactivation of uplink feedback.

In some embodiments of this application, the DCI is used to indicate activation of uplink feedback using a target feedback mechanism or deactivation of uplink feedback.

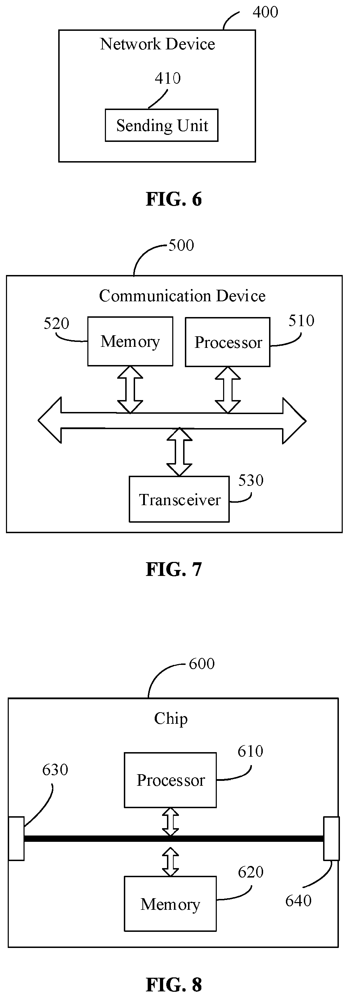

FIG. 6 is a schematic block diagram of a network device 400 provided by an embodiment of the present application.

As shown in FIG. 6, the network device 400 includes:
a sending unit 410, configured to send downlink control information DCI, wherein the DCI is used to indicate activation or deactivation of uplink feedback.

In this application, the DCI is used to schedule a physical downlink shared channel PDSCH for carrying multimedia broadcast multicast service MBMS data.

Further, a value of an information field included in the DCI is used to indicate activation or deactivation of uplink feedback.

In some embodiments of this application, the DCI includes a first information field for uplink feedback indication, and a value of the first information field is used to indicate activation or deactivation of uplink feedback.

In some embodiments of this application, when the value of the first information field is a first value, the first information field is used to indicate activation of uplink feedback; or, when the value of the first information field is a second value, the first information field is used to indicate deactivation of uplink feedback.

Additionally, the DCI includes a transmit power control TPC information field for adjusting uplink transmission power, and a value of the TPC information field is used to indicate activation or deactivation of uplink feedback.

In some embodiments of this application, when the value of the TPC information field is a third value, the TPC information field is used to indicate activation of uplink feedback; or, when the value of the TPC information field is a fourth value, the TPC information field is used to indicate deactivation of uplink feedback.

In some embodiments of this application, when the value of the TPC information field is a third value, the TPC information field is used to indicate activation of uplink feedback using a target feedback mechanism; or, when the value of the TPC information field is the fourth value, the TPC information field is used to indicate deactivation of uplink feedback.

In some embodiments of this application, the DCI includes a second information field for determining a PUCCH transmission resource or a PUCCH transmission resource set, and a value of the second information field is used to indicate activation or deactivation of uplink feedback.

In some embodiments of this application, when the value of the second information field is a fifth value, the second information field is used to indicate activation of uplink feedback; or, when the value of the second information field is the a sixth value, the second information field is used to indicate deactivation of uplink feedback.

In some embodiments of this application, the second information field includes a PUCCH resource indication information field or a PDSCH-to-HARQ_feedback timing indicator information field.

In some embodiments of this application, the DCI includes a third information field and a fourth information field, and a value of the third information field and a value of the fourth information field are used to indicate activation or deactivation of uplink feedback.

In some embodiments of this application, when the value of the third information field is a seventh value and the value of the fourth information field is an eighth value, the third information field and the fourth information field are used to indicate activation of uplink feedback; or, when the value of the third information field is not the seventh value and/or the value of the fourth information field is not the eighth value, the third information field and the fourth information field are used to indicate deactivation of uplink feedback.

In some embodiments of this application, a format of the DCI is used to indicate activation or deactivation of uplink feedback.

In some embodiments of this application, when the format of the DCI is a first format, the DCI is used to indicate activation of uplink feedback; or, when the format of the DCI is a second format, the DCI is used to indicate deactivation of uplink feedback.

In some embodiments of this application, a radio network temporary identifier RNTI used for scrambling the DCI is used to indicate activation or deactivation of uplink feedback.

In some embodiments of this application, when the RNTI used for scrambling the DCI is a first RNTI, the DCI is used to indicate activation of uplink feedback; or, when the RNTI used for scrambling the DCI is a second RNTI, the DCI is used to indicate deactivation of uplink feedback.

In some embodiments of this application, the first RNTI includes a group radio network temporary identifier G-RNTI, a broadcast radio network temporary identifier B-RNTI, or a multicast radio network temporary identifier M-RNTI.

In some embodiments of this application, a scrambling code sequence used for scrambling the DCI is used to indicate activation or deactivation of uplink feedback.

In some embodiments of this application, when the scrambling code sequence used for scrambling the DCI is a first sequence, the DCI is used to indicate activation of uplink feedback; or, when the scrambling code sequence used for scrambling the DCI is a second sequence, the DCI is used to indicate deactivation of uplink feedback.

In some embodiments of this application, a first parameter used for determining a scrambling code sequence of the DCI is used to indicate activation or deactivation of uplink feedback.

In some embodiments of this application, when the first parameter is a ninth value, the DCI is used to indicate activation of uplink feedback; or, when the first parameter is a tenth value, the DCI is used to indicate deactivation of uplink feedback.

In some embodiments of this application, an aggregation level of a PDCCH used for carrying the DCI is used to indicate activation or deactivation of uplink feedback.

In some embodiments of this application, when the aggregation level of the PDCCH used for carrying the DCI is a first aggregation level, the DCI is used to indicate activation of uplink feedback; when the aggregation level of the PDCCH used for carrying the DCI is a second aggregation level, the DCI is used to indicate deactivation of uplink feedback.

In some embodiments of this application, a type of the DCI is used to indicate activation or deactivation of uplink feedback.

In some embodiments of this application, when the type of the DCI is a dedicated DCI, the DCI is used to indicate activation of uplink feedback; or, when the type of the DCI is a common DCI, the DCI is used to indicate deactivation of uplink feedback.

In some embodiments of this application, the dedicated DCI is scrambled by a cell wireless network temporary identifier C-RNTI, and the common DCI is scrambled by a common RNTI.

In some embodiments of this application, a type of a search space of the DCI is used to indicate activation or deactivation of uplink feedback.

In some embodiments of this application, when the type of the search space of the DCI is a specific search space USS, the DCI is used to indicate activation of uplink feedback; or, when type of the search space of the DCI is a common search space CSS, the DCI is used to indicate deactivation of uplink feedback.

In some embodiments of this application, the DCI is used to indicate activation of uplink feedback using a target feedback mechanism or deactivation of uplink feedback.

It should be understood that the device embodiment and the method embodiment may correspond to each other, and similar descriptions may refer to the method embodiment. Specifically, the terminal device 300 shown in FIG. 5 may correspond to a corresponding subject performing the method 200 in the embodiment of the present application. In addition, the foregoing and other operations and/or functions of each unit in the terminal device 300 are respectively for realizing corresponding processes in the method 200. Similarly, the network device 400 shown in FIG. 6 may correspond to a corresponding subject performing the method 300 of the embodiment of the present application. In addition, the foregoing and other operations and/or functions of each unit in the network device 400 are respectively for realizing corresponding processes in each method. For the sake of brevity, details are not repeated here.

Hereinabove, the communication device in the embodiment of the present application is described from the perspective of functional modules with reference to the accompanying drawings. It should be understood that the functional modules may be implemented in the form of hardware, may also be implemented by instructions in the form of software, and may also be implemented by a combination of hardware and software modules. Specifically, each step of the method embodiment in the embodiment of the present application may be implemented by an integrated logic circuit of hardware in the processor and/or instructions in the form of software. The steps of the method disclosed in the embodiments of the present application may be directly implemented by a hardware decoding processor, or implemented by a combination of hardware and software modules in the decoding processor. Optionally, the software module may be located in a mature storage medium in the field such as random access memory, flash memory, read-only memory, programmable read-only memory, electrically erasable programmable memory, and registers. The storage medium is located in the memory, and the processor reads the information in the memory, and completes the steps in the above method embodiments in combination with its hardware.

For example, the determination unit above may be implemented by a processor, and the receiving unit and/or the sending unit may be implemented by a transceiver.

Fig. 7 is a schematic structural diagram of a communication device 500 according to an embodiment of the present application.

As shown in FIG. 7, the communication device 500 may include a processor 510.

The processor 510 may invoke and run a computer program from the memory, so as to implement the method in the embodiment of the present application.

Referring further to FIG. 7, the communication device 500 may further include a memory 520.

The memory 520 may be used to store indication information, and may also be used to store codes, instructions, etc. executed by the processor 510. Wherein, the processor 510 can invoke and run a computer program from the memory 520, so as to implement the method in the embodiment of the present application. The memory 520 may be an independent device independent of the processor 510, or may be integrated in the processor 510.

Referring further to FIG. 7, the communication device 500 may further include a transceiver 530.

The processor 510 can control the transceiver 530 to communicate with other devices, specifically, can send information or data to other devices, or receive information or data sent by other devices. The transceiver 530 may include a transmitter and a receiver. The transceiver 530 may further include antennas, and the number of antennas may be one or more.

It should be understood that various components in the communication device 500 are connected through a bus system, wherein the bus system includes not only a data bus, but also a power bus, a control bus, and a status signal bus.

It should also be understood that the communication device 500 may be the terminal device in the embodiment of the present application, and the communication device 500 may implement the corresponding processes implemented by the terminal device in each method of the embodiment of the present application, that is, the communication device 500 in the embodiment of the present application may correspond to the terminal device 300 in the embodiment of the present application, and may correspond to a corresponding subject performing the method 200 according to the embodiment of the present application, and details are not described here for brevity. Similarly, the communication device 500 may be the network device of the embodiment of the present application, and the communication device 500 may implement the corresponding processes implemented by the network device in the various methods of the embodiment of the present application. That is to say, the communication device 500 in the embodiment of the present application may correspond to the network device 400 in the embodiment of the present application, and may correspond to the corresponding subject performing the method 200 according to the embodiment of the present application, and details are not described here for brevity.

In addition, a chip is also provided in the embodiment of the present application.

For example, the chip may be an integrated circuit chip, which has signal processing capabilities, and can implement or execute the methods, steps and logic block diagrams disclosed in the embodiments of the present application. The chip can also be called system level chip, system chip, chip system or system-on-chip, etc. Optionally, the chip can be applied to various communication devices, so that the communication device installed with the chip can execute the methods, steps and logic block diagrams disclosed in the embodiments of the present application.

FIG. 8 is a schematic structural diagram of a chip 600 according to an embodiment of the present application.

As shown in FIG. 8, the chip 600 includes a processor 610.

The processor 610 may invoke and run a computer program from a memory, so as to implement the method in the embodiment of the present application.

Referring further to FIG. 8, the chip 600 may further include a memory 620.

The processor 610 may invoke and run a computer program from the memory 620, so as to implement the method in the embodiment of the present application. The memory 620 may be used to store indication information, and may also be used to store codes, instructions, etc. executed by the processor 610. The memory 620 may be an independent device independent of the processor 610, or may be integrated in the processor 610.

Referring further to FIG. 8, the chip 600 may further include an input interface 630.

The processor 610 may control the input interface 630 to communicate with other devices or chips, specifically, can obtain information or data sent by other devices or chips.

Referring further to FIG. 8, the chip 600 may further include an output interface 640.

The processor 610 may control the output interface 640 to communicate with other devices or chips, specifically, can output information or data to other devices or chips.

It should be understood that the chip 600 may be applied to the network device in the embodiment of the present application. In addition, the chip can implement the corresponding processes implemented by the network device in the various methods of the embodiments of the present application, and can also implement the corresponding processes implemented by the terminal device in the various methods of the embodiments of the present application. For the sake of brevity, details are not repeated here.

It should also be understood that various components in the chip 600 are connected through a bus system, wherein the bus system includes not only a data bus, but also a power bus, a control bus, and a status signal bus.

The processor mentioned above may include, but are not limited to:

the general-purpose processor, digital signal processor (DSP), application specific integrated circuit (ASIC), field programmable gate array (FPGA) or other programmable logic devices, discrete gates or transistor logic devices, discrete hardware components, and so on.

The processor may be used to implement or execute the methods, steps and logic block diagrams disclosed in the embodiments of the present application. The steps of the method disclosed in connection with the embodiments of the present application may be directly implemented by a hardware decoding processor, or implemented by a combination of hardware and software modules in the decoding processor. The software module may be located in a mature storage medium in the field such as random access memory, flash memory, read-only memory, programmable read-only memory or erasable programmable memory, register. The storage medium is located in the memory, and the processor reads the information in the memory, and completes the steps of the above method in combination with its hardware.

The storage mentioned above includes but is not limited to:
the volatile memory and/or non-volatile memory. The non-volatile memory can be read-only memory (ROM), programmable read-only memory (Programmable ROM, PROM), erasable programmable read-only memory (Erasable PROM, EPROM), electrically programmable erasable programmable read-only memory (Electrically EPROM, EEPROM) or Flash. The volatile memory may be random access memory (RAM), which acts as an external cache. By way of illustration and not limitation, many forms of RAM are available such as static RAM (SRAM), dynamic RAM (DRAM), synchronous DRAM (SDRAM), double data rate synchronous dynamic random access memory (Double Data Rate SDRAM, DDR SDRAM), enhanced synchronous dynamic random access memory (Enhanced SDRAM, ESDRAM), synchronous connection dynamic random access memory (synch link DRAM, SLDRAM) and direct memory bus random access memory (Direct Rambus RAM, DR RAM).

It should be noted that the memories described herein are intended to include these and any other suitable types of memories.

The embodiment of the present application also provides a computer-readable storage medium for storing computer programs. The computer-readable storage medium stores one or more programs, and the one or more programs include instructions. When the instructions are executed by a portable electronic device including a plurality of application programs, the portable electronic device can execute the method of the method embodiment.

Optionally, the computer-readable storage medium can be applied to the network device in the embodiments of the present application, and the computer program enables the computer to execute the corresponding processes implemented by the network device in the methods of the embodiments of the present application. For the sake of brevity, details are not repeated here.

Optionally, the computer-readable storage medium can be applied to the mobile terminal/terminal device in the embodiments of the present application, and the computer program enables the computer to execute the corresponding processes implemented by the mobile terminal/terminal device in the various methods of the embodiments of the present application. For the sake of brevity, details are not repeated here.

The embodiment of the present application also provides a computer program product, including a computer program.

Optionally, the computer program product can be applied to the network device in the embodiment of the present application, and the computer program enables the computer to execute the corresponding process implemented by the network device in each method of the embodiment of the present application. For the sake of brevity, details are not repeated here.

Optionally, the computer program product can be applied to the mobile terminal/terminal device in the embodiments of the present application, and the computer program enables the computer to execute the corresponding processes implemented by the mobile terminal/terminal device in the methods of the embodiments of the present application. For the sake of brevity, details are not repeated here.

The embodiment of the present application also provides a computer program. When the computer program is executed by a computer, the computer can execute the method of the method embodiment.

Optionally, the computer program can be applied to the network device in the embodiment of the present application. When the computer program is run on the computer, the computer executes the corresponding process implemented by the network device in each method of the embodiment of the present application. For the sake of brevity, details are not repeated here.

Optionally, the computer program can be applied to the mobile terminal/terminal device in the embodiment of the present application. When the computer program is run on the computer, the computer executes the corresponding processes implemented by the mobile terminal/terminal device in the methods of the embodiments of the present application. For the sake of brevity, details are not repeated here.

In addition, an embodiment of the present application also provides a communication system. The communication system may include the above-mentioned terminal device and network device to form the communication system 100 shown in FIG. 1, which will not be repeated here for brevity. It should be noted that the terms "system" and the like in this document may also be referred to as "network management architecture" or "network system".

It should also be understood that the terms used in the embodiments of the present application and the appended claims are only for the purpose of describing specific embodiments, and are not intended to limit the embodiments of the present application.

For example, the singular forms "a", "said", "above" and "the" used in the embodiments of this application and the appended claims are also intended to include plural forms unless the context clearly indicates otherwise.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art may use different methods to implement the described functions for each specific application, but such implementation should not be regarded as exceeding the scope of the embodiments of the present application. If implemented in the form of a software function unit and sold or used as an independent product, it can be stored in a computer-readable storage medium. Based on such an understanding, the technical solution of the embodiment of the present application is essentially or the part that contributes to the prior art or the part of the technical solution can be embodied in the form of a software product. The computer software product is stored in a storage medium, and includes several instructions to enable a computer device (which may be a personal computer, server, or network device, etc.) to execute all or part of the steps of the method described in the embodiments of this application. The aforementioned storage medium includes: various media capable of storing program codes such as U disk, mobile hard disk, read-only memory, random access memory, magnetic disk or optical disk.

Those skilled in the art can clearly understand that for the convenience and brevity of the description, the specific operating process of the above-described system, device and unit can refer to the corresponding process in the foregoing method embodiment, which will not be repeated here. In the several embodiments provided in this application, it should be understood that the disclosed systems, devices and methods may be implemented in other ways. For example, the division of units or modules or components in the above-described device embodiments is only a logical function division, and there may be other division methods in actual implementation. For example, a plurality of units or modules or components may be combined or may be integrated into another system, or some units or modules or components may be omitted, or not performed. For another example, the units/modules/components described above as separate/display components may or may not be physically separated. That is, it can be located in one place, or it can also be distributed to multiple network elements. Part or all of the units/modules/components can be selected according to actual needs to achieve the purpose of the embodiments of the present application. Finally, it should be noted that the mutual coupling or direct coupling or communication connection shown or discussed above may be through some interfaces, and the indirect coupling or communication connection of devices or units may be in electrical, mechanical or other forms.

The above content is only a specific implementation manner of the embodiment of the present application, but the protection scope of the embodiment of the present application is not limited thereto. Any changes or substitutions that can be easily conceived by any person skilled in the art within the technical scope disclosed in the embodiments of the present application shall fall within the scope of the embodiments of the present disclosure. Therefore, the protection scope of the embodiments of the present application should be determined by the protection scope of the claims.

## Claims

1. A wireless communication method, method performed by a terminal device (300), the method comprising:
receiving (S210) downlink control information DCI, wherein the DCI is used to indicate activation or deactivation of uplink feedback,
wherein the DCI is used to schedule a physical downlink shared channel PDSCH for carrying multimedia broadcast multicast service MBMS data, wherein a value of an information field comprised in the DCI is used to indicate activation or deactivation of uplink feedback,
**characterized in that**
the DCI comprises a transmit power control, TPC, information field for adjusting the uplink transmission power, and a value of the TPC information field is further used to indicate activation or deactivation of uplink feedback.

2. The method according to claim 1, wherein when the value of the TPC information field is a first value, the TPC information field is further used to indicate activation of uplink feedback; or, when the value of the TPC information field is a second value, the TPC information field is used to indicate deactivation of uplink feedback.

3. The method according to claim 1, wherein a format of the DCI is further used to indicate activation or deactivation of uplink feedback, and
wherein when the format of the DCI is a first format, the DCI is used to indicate activation of uplink feedback; or, when the format of the DCI is a second format, the DCI is used to indicate deactivation of uplink feedback.

4. The method according to any one of claims 1 to 3, wherein a radio network temporary identifier RNTI further used for scrambling the DCI is used to indicate activation or deactivation of uplink feedback.

5. The method according to claim 4, wherein, when the RNTI used for scrambling the DCI is a first RNTI, the DCI is used to indicate activation of uplink feedback; or, when the RNTI used for scrambling the DCI is a second RNTI, the DCI is used to indicate deactivation of uplink feedback.

6. A wireless communication performed by a network device (400), the method comprising:
sending (S210) downlink control information DCI, wherein the DCI is used to indicate activation or deactivation of uplink feedback,
wherein the DCI is used to schedule a physical downlink shared channel PDSCH for carrying multimedia broadcast multicast service MBMS data, wherein a value of an information field comprised in the DCI is used to indicate activation or deactivation of uplink feedback,
**characterized in that**
the DCI comprises a transmit power control, TPC, information field for adjusting the uplink transmission power, and a value of the TPC information field is further used to indicate activation or deactivation of uplink feedback.

7. The method according to claim 6, wherein at least one of the following is further used to indicate activation or deactivation of uplink feedback:
a format of the DCI; and
a radio network temporary identifier RNTI used for scrambling the DCI.

8. The method according to claim 7, wherein:
when the format of the DCI is a first format, the DCI is used to indicate activation of uplink feedback; or, when the format of the DCI is a second format, the DCI is used to indicate deactivation of uplink feedback.

9. The method according to claim 7, wherein:
when the RNTI used for scrambling the DCI is a first RNTI, the DCI is used to indicate activation of uplink feedback; or, when the RNTI used for scrambling the DCI is a second RNTI, the DCI is used to indicate deactivation of uplink feedback.

10. A terminal device (300), comprising units adapted to perform the method according to any one of claims 1 to 5.

11. A network device (400), comprising unit adapted to perform the method according to any one of claims 6 to 9.

## Patentansprüche

1. Drahtloses Kommunikationsverfahren, Verfahren, das von einer Endgerätvorrichtung (300) durchgeführt wird, wobei das Verfahren umfasst:
Empfangen (S210) von Abwärtsstrecken-Steuerungsinformationen, DCI (Downlink Control Information), wobei die DCI verwendet werden, um die Aktivierung oder Deaktivierung von Aufwärtsstrecken-Rückmeldung anzuzeigen,
wobei die DCI verwendet werden, um einen gemeinsam genutzten physikalischen Abwärtsstrecken-Kanal, PDSCH (Physical Downlink Shared Channel), zum Übertragen von Multimedia-Rundsendegruppendienst, MBMS (Multimedia Broadcast Multicast Service), -Daten zu planen, wobei ein Wert eines Informationsfeldes, das in den DCI enthalten ist, verwendet wird, um die Aktivierung oder Deaktivierung von Aufwärtsstrecken-Rückmeldung anzuzeigen,
**dadurch gekennzeichnet, dass**
die DCI ein Sendeleistungssteuerungs, TPC (Transmit Power Control), -Informationsfeld zum Einstellen der Aufwärtsstrecken-Sendeleistung umfassen und ein Wert des TPC-Informationsfeldes ferner verwendet wird, um die Aktivierung oder Deaktivierung von Aufwärtsstrecken-Rückmeldung anzuzeigen.

2. Verfahren gemäß Anspruch 1, wobei, wenn der Wert des TPC-Informationsfeldes ein erster Wert ist, das TPC-Informationsfeld ferner verwendet wird, um die Aktivierung von Aufwärtsstrecken-Rückmeldung anzuzeigen; oder wobei, wenn der Wert des TPC-Informationsfeldes ein zweiter Wert ist, das TPC-Informationsfeld ferner verwendet wird, um die Deaktivierung von Aufwärtsstrecken-Rückmeldung anzuzeigen.

3. Verfahren gemäß Anspruch 1, wobei ein Format der DCI ferner verwendet wird, um die Aktivierung oder Deaktivierung von Aufwärtsstrecken-Rückmeldung anzuzeigen, und
wobei, wenn das Format der DCI ein erstes Format ist, die DCI verwendet werden, um die Aktivierung von Aufwärtsstrecken-Rückmeldung anzuzeigen; oder wenn das Format der DCI ein zweites Format ist, die DCI verwendet werden, um die Deaktivierung von Aufwärtsstrecken-Rückmeldung anzuzeigen.

4. Verfahren gemäß einem der Ansprüche 1 bis 3, wobei eine temporäre Funknetzkennung, RNTI (Radio Network Temporary Identifier), die ferner zum Verwürfeln der DCI verwendet wird, verwendet wird, um die Aktivierung oder Deaktivierung von Aufwärtsstrecken-Rückmeldung anzuzeigen.

5. Verfahren gemäß Anspruch 4, wobei, wenn die zum Verwürfeln der DCI verwendete RNTI eine erste RNTI ist, die DCI verwendet werden, um die Aktivierung von Aufwärtsstrecken-Rückmeldung anzuzeigen; oder wenn die zum Verwürfeln der DCI verwendete RNTI eine zweite RNTI ist, die DCI verwendet werden, um die Deaktivierung von Aufwärtsstrecken-Rückmeldung anzuzeigen.

6. Drahtloses Kommunikationsverfahren, das von einer Netzvorrichtung (400) durchgeführt wird, wobei das Verfahren umfasst:
Senden (S210) von Abwärtsstrecken-Steuerungsinformationen, DCI (Downlink Control Information), wobei die DCI verwendet werden, um die Aktivierung oder Deaktivierung von Aufwärtsstrecken-Rückmeldung anzuzeigen,
wobei die DCI verwendet werden, um einen gemeinsam genutzten physikalischen Abwärtsstrecken-Kanal, PDSCH (Physical Downlink Shared Channel), zum Übertragen von Multimedia-Rundsendegruppendienst, MBMS (Multimedia Broadcast Multicast Service), -Daten zu planen, wobei ein Wert eines Informationsfeldes, das in den DCI enthalten ist, verwendet wird, um die Aktivierung oder Deaktivierung von Aufwärtsstrecken-Rückmeldung anzuzeigen,
**dadurch gekennzeichnet, dass**
die DCI ein Sendeleistungssteuerungs, TPC (Transmit Power Control), -Informationsfeld zum Einstellen der Aufwärtsstrecken-Sendeleistung umfassen und ein Wert des TPC-Informationsfeldes ferner verwendet wird, um die Aktivierung oder Deaktivierung von Aufwärtsstrecken-Rückmeldung anzuzeigen.

7. Verfahren gemäß Anspruch 6, wobei wenigstens eines der folgenden verwendet wird, um die Aktivierung oder Deaktivierung von Aufwärtsstrecken-Rückmeldung anzuzeigen:
ein Format der DCI; und
eine temporäre Funknetzkennung, RNTI (Radio Network Temporary Identifier), die zum Verwürfeln der DCI verwendet wird.

8. Verfahren gemäß Anspruch 7, wobei:
wenn das Format der DCI ein erstes Format ist, die DCI verwendet werden, um die Aktivierung von Aufwärtsstrecken-Rückmeldung anzuzeigen; oder, wenn das Format der DCI ein zweites Format ist, die DCI verwendet werden, um die Deaktivierung von Aufwärtsstrecken-Rückmeldung anzuzeigen.

9. Verfahren gemäß Anspruch 7, wobei:
wenn die zum Verwürfeln der DCI verwendete RNTI eine erste RNTI ist, die DCI verwendet werden, um die Aktivierung von Aufwärtsstrecken-Rückmeldung anzuzeigen; oder, wenn die zum Verwürfeln der DCI verwendete RNTI eine zweite RNTI ist, die DCI verwendet werden, um die Deaktivierung von Aufwärtsstrecken-Rückmeldung anzuzeigen.

10. Endgerätvorrichtung (300), Einheiten umfassend, die dafür ausgelegt sind, das Verfahren gemäß einem der Ansprüche 1 bis 5 durchzuführen.

11. Netzvorrichtung (400), eine Einheit umfassend, die dafür ausgelegt ist, das Verfahren gemäß einem der Ansprüche 6 bis 9 durchzuführen.

## Revendications

1. Procédé de communication sans fil, le procédé étant mis en œuvre par un dispositif terminal (300), le procédé comprenant les étapes suivantes :
recevoir (S210) des informations de contrôle de liaison descendante DCI, où les DCI sont utilisées pour indiquer l'activation ou la désactivation du retour d'informations en liaison montante,
où les DCI sont utilisées pour planifier un canal physique de liaison descendante partagé PDSCH pour transporter des données de service de multidiffusion multimédia MBMS, où une valeur d'un champ d'informations compris dans les DCI est utilisée pour indiquer l'activation ou la désactivation du retour d'informations en liaison montante,
**caractérisé en ce que**
les DCI comprennent un champ d'informations de contrôle de puissance de transmission, TPC, pour ajuster la puissance de transmission de liaison montante, et une valeur du champ d'informations TPC est en outre utilisée pour indiquer l'activation ou la désactivation du retour d'informations en liaison montante.

2. Procédé selon la revendication 1, dans lequel, lorsque la valeur du champ d'informations TPC est une première valeur, le champ d'informations TPC est en outre utilisé pour indiquer l'activation du retour d'informations en liaison montante ; ou, lorsque la valeur du champ d'informations TPC est une deuxième valeur, le champ d'informations TPC est utilisé pour indiquer la désactivation du retour d'informations en liaison montante.

3. Procédé selon la revendication 1, dans lequel un format des DCI est en outre utilisé pour indiquer l'activation ou la désactivation du retour d'informations en liaison montante, et
dans lequel, lorsque le format des DCI est un premier format, les DCI sont utilisées pour indiquer l'activation du retour d'informations en liaison montante ; ou, lorsque le format des DCI est un deuxième format, les DCI sont utilisées pour indiquer la désactivation du retour d'informations en liaison montante.

4. Procédé selon l'une quelconque des revendications 1 à 3, dans lequel un identifiant temporaire de réseau radio RNTI utilisé en outre pour brouiller les DCI est utilisé pour indiquer l'activation ou la désactivation du retour d'informations en liaison montante.

5. Procédé selon la revendication 4, dans lequel, lorsque le RNTI utilisé pour brouiller les DCI est un premier RNTI, les DCI sont utilisées pour indiquer l'activation du retour d'informations en liaison montante ; ou, lorsque le RNTI utilisé pour brouiller les DCI est un deuxième RNTI, les DCI sont utilisées pour indiquer la désactivation du retour d'informations en liaison montante.

6. Communication sans fil effectuée par un dispositif de réseau (400), le procédé comprenant les étapes suivantes :
envoyer (S210) des informations de contrôle de liaison descendante DCI, où les DCI sont utilisées pour indiquer l'activation ou la désactivation du retour d'informations en liaison montante,
où les DCI sont utilisées pour planifier un canal physique partagé en liaison descendante PDSCH pour transporter des données de service de multidiffusion multimédia MBMS, où une valeur d'un champ d'information compris dans les DCI est utilisée pour indiquer l'activation ou la désactivation du retour d'informations en liaison montante,
**caractérisé en ce que**
les DCI comprennent un champ d'informations de contrôle de puissance d'émission, TPC, pour ajuster la puissance d'émission de liaison montante, et une valeur du champ d'informations TPC est en outre utilisée pour indiquer l'activation ou la désactivation du retour d'informations en liaison montante.

7. Procédé selon la revendication 6, dans lequel au moins l'un des éléments suivants est en outre utilisé pour indiquer l'activation ou la désactivation du retour d'informations en liaison montante :
un format des DCI ; et
un identifiant temporaire de réseau radio RNTI utilisé pour brouiller les DCI.

8. Procédé selon la revendication 7, dans lequel :
lorsque le format des DCI est un premier format, les DCI sont utilisées pour indiquer l'activation du retour d'informations en liaison montante ; ou, lorsque le format des DCI est un deuxième format, les DCI sont utilisées pour indiquer la désactivation du retour d'informations en liaison montante.

9. Procédé selon la revendication 7, dans lequel :
lorsque le RNTI utilisé pour brouiller les DCI est un premier RNTI, les DCI sont utilisées pour indiquer l'activation du retour d'informations en liaison montante ; ou, lorsque le RNTI utilisé pour brouiller les DCI est un deuxième RNTI, les DCI sont utilisées pour indiquer la désactivation du retour d'informations en liaison montante.

10. Dispositif terminal (300), comprenant des unités adaptées pour exécuter le procédé selon l'une quelconque des revendications 1 à 5.

11. Dispositif réseau (400), comprenant une unité adaptée pour exécuter le procédé selon l'une quelconque des revendications 6 à 9.
